# FASCICULE DE BREVET EUROPEEN

(11) **EP 0 495 067 B1**
(45) Date de publication et mention de la délivrance du brevet: **27.09.1995**
(21) Numéro de dépôt: 91914732.2
(22) Date de dépôt: 02.08.1991
(51) Int. Cl.: H01G 9/00

(54) **Bande de connexion pour la fabrication de condensateurs électrolytiques et procédé de fabrication de condensateurs électrolytiques**
Anschlussband für die Herstellung von Elektrolytkondensatoren und Herstellungsverfahren von Elektrolytkondensatoren
Connection band for the manufacturing of electrolytic capacitors and manufacturing process for electrolytic capacitors

(30) Priorité: 10.08.1990 FR 9010248
(43) Date de publication de la demande: 22.07.1992
(73) Titulaire: COMPAGNIE EUROPEENNE DE COMPOSANTS ELECTRONIQUES LCC, F-92400 Courbevoie (FR)
(72) Inventeur: DELALANDE, François, F-71270 Pierre-de-Bresse (FR); BESNARD, Patrice, F-21000 Dijon (FR)
(74) Mandataire: Ruellan-Lemonnier, Brigitte
(86) Numéro de dépôt international: FR9100644
(87) Numéro de publication internationale: WO9202943

(56) Documents cités:
- FR-A- 2 625 832
- US-A- 4 483 062
- US-A- 4 539 623

## Description

La présente invention concerne la fabrication de condensateurs électrolytiques, plus particulièrement les bandes de connexion pour anodes de condensateurs électrolytiques.

Actuellement, les condensateurs électrolytiques sont réalisés généralement en utilisant une anode en aluminium ou en tantale et un électrolyte qui peut être solide ou liquide.

Un procédé de fabrication de condensateurs à l'aluminium et à électrolyte solide comporte plusieurs étapes, un procédé similaire pouvant être utilisé pour des condensateurs au tantale et à électrolyte solide. Ces étapes sont principalement :
- l'obtention du bloc d'anode soit par compactage d'un fil d'aluminium, soit par gravure, pliage ou enroulement d'une feuille d'aluminium, soit par frittage ;
- la soudure du bloc d'anode sur une languette d'une bande de connexion (dénommée le plus souvent en langue anglais "lead frame") ;
- l'anodisation du pavé d'aluminium pour former une mince couche d'alumine (oxydation)
- la formation de l'électrolyte solide (imprégnation et pyrolyse) ;
- la mise en place de la cathode (graphitage et/ou argenture) ; et
- le surmoulage.

Le procédé de fabrication de ces condensateurs est assez compliqué et les problèmes rencontrés à l'heure actuelle au cours de la fabrication des condensateurs électrolytiques sont de plusieurs types.

La connexion du bloc d'anode sur la languette de la bande de connexion qui s'effectue par une soudure, est soumise à des contraintes de cotes à respecter pour tenir compte des différentes phases de fabrication.

En effet, pour réaliser le dépôt d'électrolyte puis de graphite, les blocs anodisés sont trempés dans différentes solutions qui présentent une bonne mouillabilité et l'on observe une remontée par capillarité de l'électrolyte et du graphite conducteurs autour de la soudure. Il y a donc risque de court-circuit entre l'anode non oxydée et la cathode constituée par l'électrolyte. Cette remontée par capillarité n'est pas contrôlable et varie selon les matériaux en présence et leurs états de surface.

Pour éviter de tels courts-circuits, des cotes sont imposées, à savoir : hauteur minimum pour l'oxydation de la languette de la bande de connexion et hauteur minimum, inférieure à la précédente, pour l'imprégnation électrolytique et le graphitage en tenant compte de la remontée par capillarité. Il y a donc une partie oxydée de l'anode qui n'est pas imprégnée et qui est inactive d'un point de vue capacitif.

La présente invention propose un moyen mécanique qui élimine cet effet de capillarité tout en permettant de réduire les différentes cotes à respecter. En réduisant la cote d'oxydation par rapport à celle d'imprégnation et de graphitage, elle diminue la perte de volume actif.

L'invention consiste en une bande de connexion selon la revendication 1.

L'invention concerne aussi des procédés de fabrication d'un condensateur électrolytique selon les revendications 6 et 7.

L'invention sera mieux comprise et d'autres avantages apparaîtront à la lecture de la description d'un mode de réalisation préférentiel, faite avec référence aux dessins ci-annexés dans lesquels :
- la figure 1 représente une bande de connexion pour condensateurs électrolytiques selon l'art connu ;
- la figure 2 représente une bande de connexion pour condensateurs électrolytiques selon l'invention ; et
- la figure 3 représente une variante de réalisation de la présente invention.

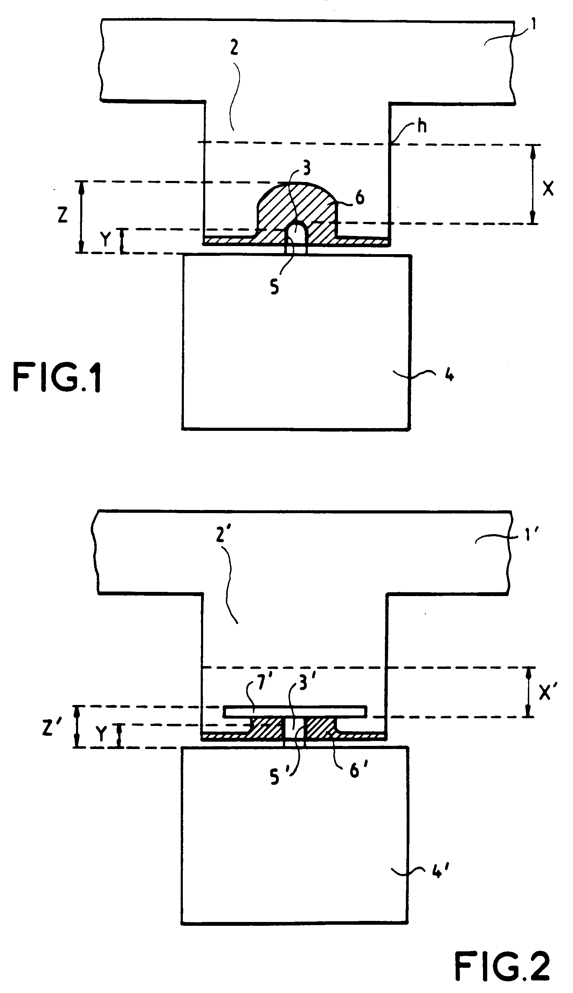

Sur la figure 1, on a représenté une partie d'une bande de connexion 1. Cette bande peut être réalisée en aluminium ou en tantale ou en tout autre métal compatible avec l'anode du condensateur. Elle est munie de languettes 2 réalisées dans le même matériau. Sur l'une d'entre elles, on a soudé le fil de connexion 3 issu du bloc anode 4. Cette soudure 5 est réalisée avant le trempage du bloc d'anode dans les différents bains permettant de réaliser tout d'abord l'oxydation du bloc d'anode puis le dépôt de l'électrolyte ou imprégnation et ensuite le graphitage. Suite au trempage dans ces différents bains, l'on voit apparaître une remontée par capillarité 6 autour de la soudure 5 qui entraîne une cote non contrôlable. Si la cote Y représente la tolérance au niveau du bain dans les phases d'imprégnation et de graphitage, alors la cote X est la cote perdue en volume actif du condensateur. En effet, pour des raisons de sécurité, l'oxydation doit remonter jusqu'à la limite h sur la figure 1 ce qui diminue, pour des dimensions externes données le volume actif du condensateur.

Un mode de réalisation de la présente invention est représenté sur la figure 2. Dans ce cas, la bande de connexion 1′ a été améliorée par rapport à celle vue précédemment. La languette 2′ est percée d'une fenêtre 7′ rectangulaire laissant un espace suffisant entre elle-même et le bord de la languette 2′ pour permettre la soudure 5′ du bloc d'anode 4′. La fenêtre 7′ stoppe la remontée par capillarité 6′ et impose la cote Z′. Cette cote Z′ est fixe. De ce fait, le niveau oxydé peut être rapproché en toute sécurité. En conséquence, la cote X′ entre la soudure et le niveau d'oxydation est inférieure à la cote X et a été réduite de la différence de cote (Z-Z′).

La fenêtre 7′ peut avoir différentes formes. Elle peut être rectangulaire, ronde, de forme quelconque tant qu'elle respecte, par ses dimensions, sa fonction de barrière à la remontée par capillarité tout en laissant une languette de connexion suffisamment solide. Elle présente de préférence une épaisseur d'au moins 0,3 mm et une longueur comprise entre 0,5 et 0,7 fois la largeur de la languette.

A titre d'exemple, on a réalisé une fenêtre d'épaisseur 0,3 mm et de largeur 1,6 mm sur une languette de connexion de 2,4 mm de large. Cette fenêtre est placée à 0,3 mm de l'extrémité libre de la languette. Pour une connexion réalisée par une soudure de dimension 0,4 à 0,3 mm, d'un fil de 0,3 mm sur une telle languette de connexion, on observe un mouillage sur une longueur de 0,9 à 1,2 mm. Celui-ci n'est pas contrôlable et varie suivant les matériaux et leurs états de surface ; mais il faut savoir que le mouillage est plus important avec le graphite qu'avec le nitrate de manganèse. La présente invention limite donc l'étendue de ce mouillage.

D'autres avantages découlent de cette invention.

La fenêtre peut aussi être utilisée comme un repère visuel de niveau lors des différentes étapes de fabrication.

La fenêtre 7′ permet la soudure du bloc anode 4′ au ras de la languette 2′ de la bande de connexion 1′ ce qui évite un gaspillage de longueur d'anode inactive.

Lors de la phase définitive de surmoulage, la résine utilisée pénètre la fenêtre 7′ et assure ainsi un meilleur ancrage dans la languette de connexion.

La fenêtre 7′ peut être réalisée avant ou après la soudure 5′ des blocs d'anode 4′ sur les languettes 2′ de la bande de connexion 1′ et, dans les deux cas, la fenêtre 7′ permet la découpe de l'excédent de fil 3′ au-dessus de la soudure 5′.

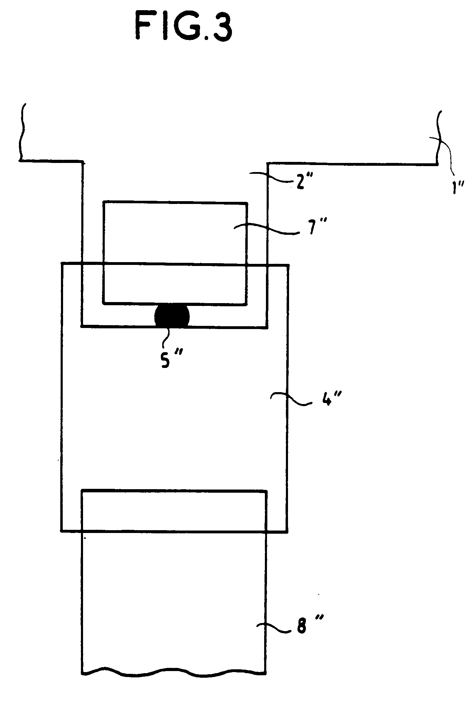

Selon une variante de la présente invention représentée sur la figure 3, la fenêtre 7˝ peut avoir une épaisseur relativement grande. Dans ce cas, la fenêtre est utilisée comme repère pour l'anode 2˝. La figure 3 représente donc une partie de bande de connexion 1˝ dont les languettes 2˝ sont percées d'une fenêtre 7˝ plus épaisse que dans la figure 2. En conséquence, une fois le condensateur 4˝ terminé, on repère l'anode 2˝ par rapport à la cathode 8˝ grâce à la fenêtre 7˝ qui n'est pas entièrement surmoulée.

## Revendications

1. Bande de connexion (1′, 1˝) pour la fabrication de condensateurs électrolytiques, la bande de connexion étant munie de languettes (2′,2˝) pour la connexion d'un bloc d'anode (4′, 4˝) muni d'un fil de connexion (3′), ladite fabrication comprenant les étapes successives suivantes :
- soudure du fil de connexion (3′) d'un bloc d'anode (4′, 4˝) à l'extrémité libre d'une languette (2′, 2˝),
- anodisation dudit bloc d'anode,
- formation de l'électrolyte solide par trempage et
- mise en place de la cathode par trempage,
la bande de connexion étant munie d'une languette (2′, 2˝) par bloc d'anode (4′, 4˝) à souder, caractérisée en ce que ladite languette (2′, 2˝) est munie près de son extrémité libre d'une fenêtre (7′, 7˝) permettant de stopper toute remontée de matière par capillarité lors des étapes de formation et de mise en place qui succèdent à ladite étape de soudure.

2. Bande de connexion selon la revendication 1, caractérisée en ce que ladite fenêtre (7′, 7˝) est rectangulaire, carrée, ou ronde.

3. Bande de connexion selon la revendication 2, caractérisée en ce que ladite fenêtre (7′, 7˝) a, selon la direction définie par la largeur de la languette, une dimension sensiblement comprise entre 0,5 et 0,7 fois ladite largeur.

4. Bande de connexion selon l'une quelconque des revendications 2 ou 3, caractérisée en ce que ladite fenêtre (7′, 7˝) a, selon la direction définie perpendiculairement à la direction définie par la largeur de la languette, une dimension au moins égale à 0,3 mm.

5. Bande de connexion selon l'une quelconque des revendications 1 à 4, caractérisée en ce qu'elle est réalisée en métal tel que l'aluminium ou le tantale.

6. Procédé de fabrication d'un condensateur électrolytique, caractérisé en ce qu'il comprend les étapes suivantes :
- obtention d'un bloc d'anode (4′, 4˝) muni d'un fil de connexion (3′) soit par compactage d'un fil d'aluminium ou de tantale, soit par gravure ou pliage ou enroulement d'une feuille d'aluminium ou de tantale, soit par frittage d'une poudre d'aluminium ou de tantale,
- soudure dudit fil de connexion (3′) sur l'extrémité libre d'une languette (2′, 2˝) d'une bande de connexion, ladite languette étant munie près de son extrémité libre d'une fenêtre (7′, 7˝) permettant de stopper toute remontée de matière par capillarité lors des étapes ultérieures de formation et de mise en place,
- anodisation dudit bloc d'anode pour former une mince couche de diélectrique,
- formation de l'électrolyte solide par trempage,
- mise en place de la cathode par trempage,
- surmoulage.

7. Procédé de fabrication d'un condensateur électrolytique, caractérisé en ce qu'il comprend les étapes suivantes :
- obtention d'un bloc d'anode (4′, 4˝) muni d'un fil de connexion (3′) soit par compactage d'un fil d'aluminium ou de tantale, soit par gravure ou pliage ou enroulement d'une feuille d'aluminium ou de tantale, soit par frittage d'une poudre d'aluminium ou de tantale,
- soudure dudit fil de connexion (3′) sur l'extrémité libre d'une languette (2′, 2˝) d'une bande de connexion,
- réalisation d'une fenêtre (7′, 7˝) sur ladite languette près de son extrémité libre de façon à stopper toute remontée de matière par capillarité lors des étapes ultérieures de formation et de mise en place,
- anodisation dudit bloc d'anode pour former une mince couche de diélectrique,
- formation de l'électrolyte solide par trempage,
- mise en place de la cathode par trempage,
- surmoulage.

## Patentansprüche

1. Anschlußstreifen (1′, 1˝) für die Herstellung von Elektrolytkondensatoren, wobei der Anschlußstreifen mit Zungen (2′, 2˝) für den Anschluß eines mit einem Anschlußdraht (3′) versehenen Anodenblocks (4′, 4˝) versehen ist, wobei die Herstellung die folgenden aufeinanderfolgenden Schritte umfaßt :
- Anlöten des Anschlußdrahts (3′) eines Anodenblocks (4′, 4˝) an das freie Ende einer Zunge (2′, 2˝),
- Anodisieren des Anodenblocks,
- Bildung des festen Elektrolyts im Tauchbad und
- Anbringen der Kathode im Tauchbad, wobei der Anschlußstreifen mit einer Zunge (2′, 2˝) pro anzulötendem Anodenblock (4′, 4˝) ausgestattet ist, dadurch gekennzeichnet, daß die Zungen (2′, 2˝) nahe ihrem freien Ende mit einem Fenster (7′, 7˝) versehen ist, das es ermöglicht, jedes Aufsteigen von Material durch Kapillarwirkung während der auf den Lötvorgang folgenden Bildungs- und Anbringungsschritte zu stoppen.

2. Anschlußstreifen gemäß Anspruch 1, dadurch gekennzeichnet, daß das Fenster (7′, 7˝) rechteckig, quadratisch oder rund ist.

3. Anschlußstreifen gemäß Anspruch 2, dadurch gekennzeichnet, daß das Fenster (7′, 7˝) in der durch die Breite der Zunge definierten Richtung eine Abmessung hat, die im wesentlichen zwischen dem 0,5fachen und dem 0,7fachen dieser Breite liegt.

4. Anschlußstreifen gemäß einem der Ansprüche 2 oder 3, dadurch gekennzeichnet, daß das Fenster (7′, 7˝) in der Richtung, die senkrecht zu der durch die Breite der Zunge definierten Richtung ist, eine Abmessung von wenigstens 0,3 mm hat.

5. Anschlußstreifen gemäß einem der Ansprüche 1 bis 4, dadurch gekennzeichnet, daß er aus einem Metall, wie Aluminium oder Tantal, besteht.

6. Verfahren zur Herstellung eines Elektrolytkondensators, dadurch gekennzeichnet, daß es die folgenden Schritte umfaßt :
- Bildung eines mit einem Anschlußdraht (3′) versehenen Anodenblocks (4′, 4˝) entweder durch Kompaktieren eines Aluminium- oder Tantaldrahts oder durch Ätzen oder Falten oder Aufwickeln einer Aluminium- oder Tantalfolie oder durch Sintern eines Aluminium- oder Tantalpulvers,
- Anlöten des Anschlußdrahts (3′) am freien Ende einer Zunge (2′, 2˝) eines Anschlußstreifens, wobei die Zunge nahe ihrem freien Ende mit einem Fenster (7′, 7˝) versehen ist, das es ermöglicht, jedes Aufsteigen von Material durch Kapillarwirkung bei den folgenden Bildungs- und Anbringungsschritten zu stoppen,
- Anodisieren des Anodenblocks zur Bildung einer dünnen Schicht aus Dielektrikum,
- Bildung des festen Elektrolyts im Tauchbad,
- Anbringen der Kathode im Tauchbad,
- Vergießen.

7. Verfahren zur Herstellung eines Elektrolytkondensators, dadurch gekennzeichnet, daß es die folgenden Verfahrensschritte enthält:
- Bildung eines mit einem Anschlußdraht (3′) versehenen Anodenblocks (4′, 4˝) entweder durch Kompaktieren eines Aluminium- oder Tantaldrahts oder durch Ätzen oder Falten oder Aufwickeln einer Aluminiun - oder Tantalfolie oder durch Sintern eines Aluminium- oder Tantalpulvers,
- Anlöten des Anschlußdrahts (3′) am freien Ende einer Zunge (2′, 2˝) eines Anschlußstreifens,
- Bildung eines Fenster (7′, 7˝) in der Zunge nahe deren freiem Ende, um jedes Aufsteigen von Material durch Kapillarwirkung bei den folgenden Bildungs- und Anbringungsschritten zu stoppen,
- Anodisieren des Anodenblocks zur Bildung einer dünnen Schicht aus Dielektrikum,
- Bildung des festen Elektrolyts im Tauchbad,
- Anbringen der Kathode im Tauchbad,
- Vergießen.

## Claims

1. A connection strip (1′, 1˝) for the manufacture of electrolytic capacitors, the connection strip being provided with lugs (2′, 2˝) for the connection of an anode block (4′, 4˝) provided with a connection wire (3′), said manufacture comprising the following successive steps:
- soldering of the connection wire (3′) of an anode block (4′, 4˝) to the free end of a lug (2′, 2˝),
- anodizing the said anode block,
- formation of the solid electrolyte by immersion and
- placement of the cathode by immersion,
the connection strip being provided with a lug (2′, 2˝) per anode block (4′, 4˝) to be soldered, characterized in that the said lug (2′, 2˝) is provided adjacent to its free end with a window (7′, 7˝) rendering it possible to halt any upward movement of material by capillarity during the steps of formation and placement which follow the said soldering step.

2. The connection strip as claimed in claim 1, characterized in that the said window (7′, 7˝) is rectangular, square or round.

3. The connection strip as claimed in claim 2, characterized in that the said window (7′, 7˝) possesses, in the direction defined by the width of the lug, a dimension substantially comprised between 0.5 and 0.7 times the said width.

4. The connection strip as claimed in either of the claims 2 and 3, characterized in that the said window (7′, 7˝) possesses, in the direction perpendicular to the direction defined by the width of the lug, a dimension equal to at least 0.3 mm.

5. The connection strip as claimed in any one of the claims 1 through 4, characterized in that it is produced of a metal such as aluminum or tantalum.

6. A method for the manufacture of an electrolytic capacitor, characterized in that it comprises the following steps:
- production of an anode block (4′, 4˝) provided with a connection wire (3′) either by compaction of an aluminum or tantalum wire, by etching or folding or winding an aluminum or tantalum sheet, or by sintering an aluminum or tantalum powder,
- soldering the said connection wire (3˝) on the free end of a lug (2′, 2˝) of a connection strip, the said lug being provided adjacent to its free end with a window (7′, 7˝) rendering it possible to halt any upward movement of material by capillarity during the later steps of formation and placement,
- anodizing of the said anode block in order to form a thin dielectric layer,
- formation of the solid electrolyte by immersion,
- placement of the cathode by immersion,
- potting.

7. A method for the manufacture of an electrolytic capacitor, characterized in that it comprises the following steps:
- production of an anode block (4′, 4˝) provided with a connection wire (3′) either by compaction of an aluminum or tantalum wire, by etching or folding or winding an aluminum or tantalum sheet, or by sintering an aluminum or tantalum powder,
- soldering the said connection wire (3˝) on the free end of a lug (2′, 2˝) of a connection strip,
- production of a window (7′, 7˝) on the said lug adjacent to the free end in such a manner as to halt upward movement of material by capillarity during the later steps of formation and placement,
- anodizing of the said anode block in order to form a thin dielectric layer,
- formation of the solid electrolyte by immersion,
- placement of the cathode by immersion,
- potting.
